# FASCICULE DE BREVET EUROPEEN

(11) **EP 0 390 659 B1**
(45) Date de publication et mention de la délivrance du brevet: **04.05.1994**
(21) Numéro de dépôt: 90400808.3
(22) Date de dépôt: 23.03.1990
(51) Int. Cl.: H01G 9/04

(54) **Procédé de fabrication d'anodes fil pour condensateurs électrolytiques et dispositif pour sa mise en oeuvre**
Verfahren zur Herstellung von Drahtanoden für elektrolytische Kondensatoren sowie Vorrichtung dafür
Method of making wire anodes for electrolytic capacitors and apparatus therefor

(30) Priorité: 31.03.1989 FR 8904255
(43) Date de publication de la demande: 03.10.1990
(73) Titulaire: COMPAGNIE EUROPEENNE DE COMPOSANTS ELECTRONIQUES LCC, F-92400 Courbevoie (FR)
(72) Inventeur: Delalande, François, F-92045 Paris La Défense (FR)
(74) Mandataire: Guérin, Michel

(56) Documents cités:
- FR-A- 1 496 345

## Description

La présente invention concerne un procédé de fabrication d'anodes fil pour condensateurs électrolytiques. Elle concerne également un dispositif permettant de mettre en oeuvre ce procédé.

Les condensateurs électrolytiques sont surtout utilisés à cause de leur grande capacité dans un volume réduit. Actuellement, trois familles de condensateurs électrolytiques à faible produit CxV sont présents sur le marché. On trouve des condensateurs à l'aluminium et à électrolyte liquide : l'anode est en aluminium et la cathode est un liquide électrolytique. On trouve aussi des condensateurs au tantale et à électrolyte solide : l'anode est au tantale et la cathode est un électrolyte semiconducteur solide. On trouve enfin des condensateurs à l'aluminium et à électrolyte solide : l'anode est en aluminium et la cathode est un électrolyte semiconducteur solide.

La dernière famille citée a connu récemment un développement certain. La Société Philips a développé plusieurs gammes de condensateurs électrolytiques à l'aluminium et à électrolyte solide. L'anode est réalisée à partir d'une feuille enroulée ou pliée. Le procédé de fabrication à partir d'une anode en feuille comprend les étapes suivantes :
- découpe de la feuille d'aluminium,
- gravure de la feuille,
- pliage de la feuille d'aluminium gravée dans le cas de condensateurs radiaux ou enroulement dans le cas de condensateurs axiaux,
- anodisation de la feuille pour former une mince couche d'alumine,
- formation de l'électrolyte solide (dioxyde de manganèse) par pyrolyse,
- mise en place de la cathode.

Le procédé de fabrication de ces condensateurs est assez compliqué. Il comprend une opération de pliage individualisé dans le cas des condensateurs radiaux ou d'enroulement individualisé dans le cas de condensateurs axiaux. L'étape de formation de l'électrolyte solide est la plus délicate. Plusieurs cycles de pyrolyse sont nécessaires (quatre en principe) et ces cycles doivent se dérouler dans des conditions de température et de durée bien déterminées. Ce sont des opérations très difficiles à maîtriser. En effet, le produit de base utilisé est une solution de nitrate de manganèse très agressive. La conversion en dioxyde de manganèse doit être très rapide. Une opération de post-formation est nécessaire pour réparer la couche endommagée par le nitrate.

On connaît d'autre part, par le brevet FR 1 496 345, un procédé pour la fabrication de l'anode d'un condensateur électrolytique à partir d'un fil d'un métal anodisable. Selon ce brevet, le fil métallique est d'abord soumis à un jet de particules d'un matériau dur. L'une des extrémités du fil ainsi traité est glissée dans un trou borgne ménagé dans un piston de compression, le reste du fil se trouvant alors dans la cavité du manchon de compression associé au poinçon. Le fond du manchon étant obturé, le piston est poussé vers le fond de la cavité ce qui a pour effet de compacter le fil. On obtient ainsi un bloc possédant une grande surface active. Pour sortir le bloc de son logement, on ouvre le fond de la cavité et le piston continue sa progression pour évacuer le bloc d'anode. Celui-ci est détaché du piston et est disponible pour subir l'opération de formation de la couche d'oxyde.

Ce procédé présente plusieurs inconvénients majeurs. Il est difficile à exploiter industriellement du fait de l'utilisation de longueurs de fil déterminées, délicates à manipuler et à introduire dans le trou du piston. La tendance actuelle à la miniaturisation des composants impose impérativement des anodes de petites dimensions (de l'ordre de quelques mm³), ce qui rend pratiquement impossible la réalisation du dispositif de mise en oeuvre du procédé. En effet, pour avoir une surface active d'anode suffisante, il faut utiliser un fil métallique dont le diamètre est de l'ordre de 0,2 mm pour une longueur qui peut être de 500 mm. Dans ces conditions, il est extrêmement difficile de réaliser un piston percé d'un trou borgne et un manchon de dimensions appropriées. Enfin, la densité de pressage n'est pas homogène du fait des frottements qui se produisent entre la surface externe du bloc en cours de compression et les parois du manchon. Ces frottements sont d'autant plus importants que le bloc en cours de compactage est long et que, tant que le compactage n'est pas terminé, il demeure légèrement élastique.

Afin de pallier ces inconvénients, la demanderesse a conçu un procédé original permettant le compactage de blocs d'anodes de petites dimensions et à cadence élevée. Le dispositif élaboré pour mettre en oeuvre le procédé selon l'invention permet en outre de résoudre les problèmes dus à la densité de pressage.

L'invention a donc pour objet un procédé de fabrication d'anodes fil pour condensateurs électrolytiques, les anodes étant obtenues par compactage d'un fil en métal anodisable dans la cavité d'un manchon de compression sous l'effet d'un piston, caractérisé en ce que, le fil traversant de part en part le piston selon l'axe de son déplacement et le manchon par passage dans sa cavité, le procédé comporte, pour la réalisation d'une anode, les opérations suivantes :
a) obturation du fond de la cavité et fixation du fil à ce niveau,
b) immobilisation du fil par rapport au piston qui est dans sa position relevée,
c) compactage du fil dans la cavité par enfoncement du piston,
d) le fil et le piston sont désolidarisés,
e) si nécessaire répétition des opérations b) à d) jusqu'à obtenir la longueur d'anode désirée avec remontée préalable du piston jusqu'à sa position relevée,
f) ouverture du fond de la cavité et évacuation de l'anode obtenue hors de la cavité grâce au piston,
g) remontée du piston jusqu'à sa position relevée, l'anode précédemment obtenue demeurant dans sa position évacuée, pour débuter la fabrication de l'anode suivante.

L'invention a également pour objet un dispositif pour la mise en oeuvre du procédé ci-dessus, le dispositif comprenant un piston, un manchon de compression percé de part et d'autre d'une cavité dans laquelle peut coulisser le piston, des moyens d'obturation du fond de la cavité sur lesquels le fil est compacté caractérisé en ce que le piston est percé d'un trou axial permettant le passage du fil à compacter, le dispositif comprenant également des moyens d'immobilisation du fil par rapport au piston.

L'invention sera mieux comprise et d'autres avantages apparaîtront à la lecture de la description qui va suivre, donnée à titre non limitatif, et grâce aux figures annexées parmi lesquelles :
- la figure 1 représente un dispositif de mise en oeuvre du procédé selon l'invention,
- les figures 2 et 3 représentent le dispositif selon l'invention en cours de fonctionnement,
- la figure 4 est un diagramme se rapportant à un procédé selon l'art connu,
- la figure 5 est un diagramme se rapportant à un procédé selon l'invention.

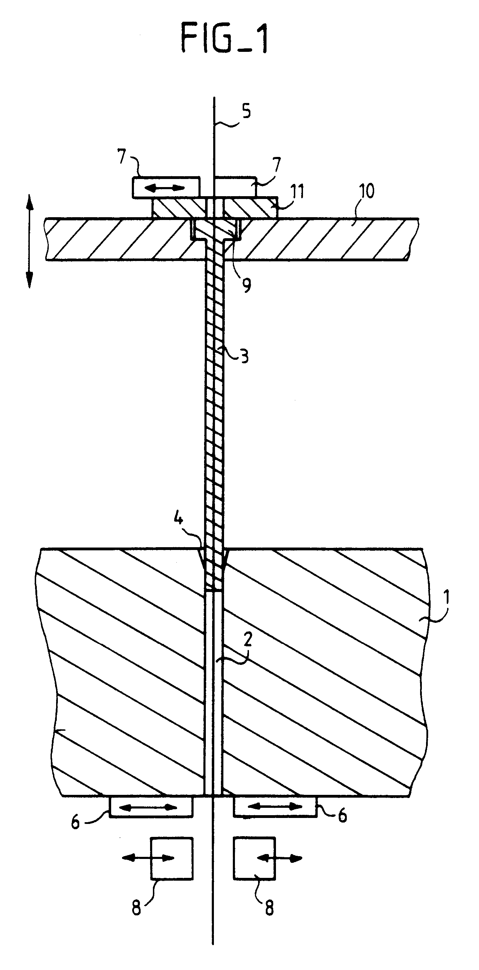

La figure 1 représente un dispositif de mise en oeuvre du procédé selon l'invention. Le dispositif comprend principalement un manchon de compression 1 percé de part en part d'une cavité 2 dans laquelle peut coulisser un piston 3 représenté ici dans sa position relevée. La cavité 2 comporte un évasement 4 pour faciliter l'introduction du piston. L'une des caractéristiques importantes de l'invention est de travailler en continu à partir d'une bobine de fil métallique et de fabriquer des anodes sans avoir à arrêter le dispositif pour manipuler ou couper le fil. Pour cela, le piston 3 est pourvu d'un trou axial dans lequel passe le fil 5. Comme le montre la figure 1, le fil, qui alimente le dispositif par le dessus, ne subit aucune déviation ni rappel. Il tombe naturellement dans la cavité 2 lorsqu'il est dévidé de sa bobine. Le fait qu'il parvienne dans la cavité de compression dans l'axe de cette cavité évite son coincement entre le piston et la paroi de la cavité.

Le dispositif comprend encore différents éléments permettant la mise en oeuvre du procédé selon l'invention. Ces éléments peuvent être ceux illustrés par la figure 1 :
- une pince 6 permettant l'obturation du fond de la cavité 2 et le serrage du fil 5 à ce niveau,
- une pince 7 permettant de serrer le fil et de l'immobiliser par rapport au piston,
- une pince 8 permettant de retenir l'anode formée et évacuée de la cavité lorsque le piston remonte.

Dans l'exemple de réalisation représenté à la figure 1, l'extrémité supérieure du piston 3 forme une collerette 9 qui prend place dans un logement du coulisseau 10 qui peut se déplacer verticalement. Une pièce 11, fixée au coulisseau 10, bloque la collerette 9 dans son logement. Elle est percée d'un trou dans l'axe du piston pour permettre le passage du fil 5. La pince 7 est solidaire de l'ensemble coulisseau 10-pièce 11. Ainsi, lorsque la pince 7 sera fermée, le fil 5 sera immobilisé par rapport au piston et sera entraîné par son mouvement.

L'un des avantages de l'invention est de permettre le compactage des anodes en opérant par étapes successives à pression constante. Ainsi le piston 3 peut être animé d'un mouvement de va-et-vient sous charge constante par l'intermédiaire du coulisseau 10.

Le procédé de fabrication selon l'invention comporte les opérations suivantes. On suppose que le fil 5, qui peut être gravé et déjà oxydé, traverse le piston et le manchon comme cela est représenté figure 1. Le trou axial du piston dans lequel passe le fil possède un diamètre de préférence légèrement supérieur au diamètre du fil de façon que le fil passe sans résistance mais qu'il n'ait pas tendance à refouler dans le trou lors de la compression.

On ferme la pince 6 qui obture le fond de la cavité 2 tout en serrant le fil 5 à ce niveau. Le coulisseau 10 étant en position haute (piston en position relevée), on ferme la pince 7, ce qui a pour conséquence d'immobiliser le fil par rapport au piston.

Le piston 3 est ensuite poussé vers le fond de la cavité pour obtenir le compactage du fil 5. Il peut être avantageux de réaliser le compactage en plusieurs étapes. Dans ce cas, après avoir compacté une longueur déterminée de fil correspondant à une fraction d'anode, on ouvre la pince 7 et on remonte le piston 3 en position relevée, la pince 6 demeurant fermée. La pince 7 est alors à nouveau fermée et le piston est actionné pour compacter une nouvelle fraction d'anode qui va s'ajouter à la première. Par répétition de ces opérations, on peut obtenir une anode complète. On ouvre ensuite la pince 7.

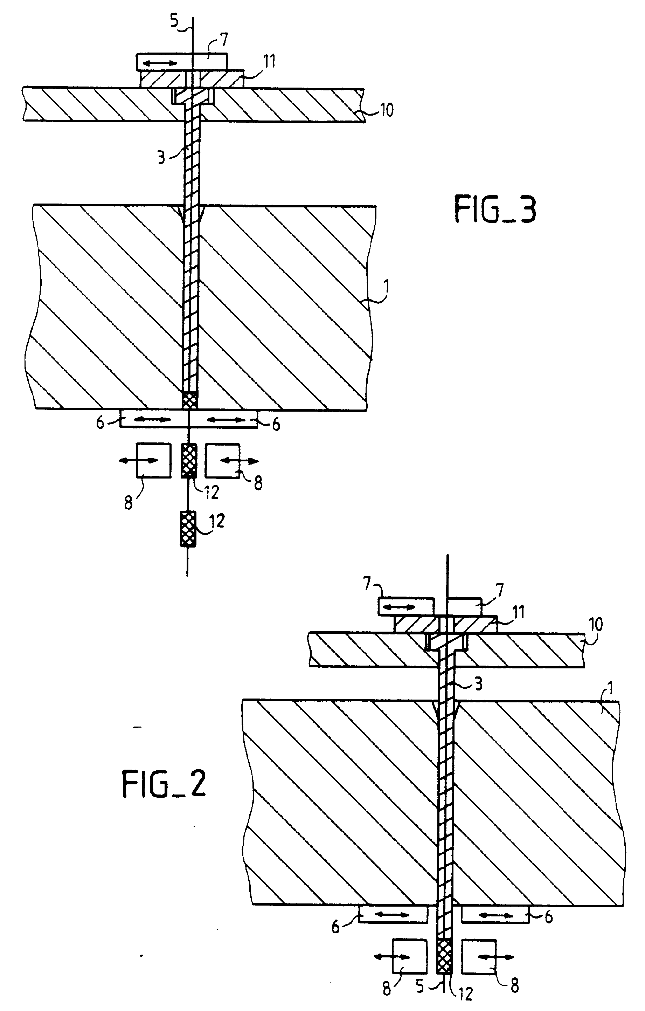

Pour évacuer l'anode réalisée, on ouvre la pince 6 et le piston 3 est poussé un peu plus pour dégager l'anode jusqu'à la placer dans l'espace libre formée par la pince 8 en position ouverte. C'est ce que représente la figure 2 où l'anode est représentée sous la référence 12. La pince 8 se ferme alors pour retenir l'anode 12 et le piston 3 peut remonter en position relevée.

Un cycle de fabrication d'anode peut recommencer avec la fermeture de la pince 6 d'obturation du fond de la cavité et de retenue du fil 5. La pince 8 peut revenir en position ouverte.

La figure 3 représente le dispositif selon l'invention en cours de fonctionnement. Deux anodes 12 réalisées sont visibles sur cette figure. Une anode est en cours de réalisation. On remarque que les pinces 6 et 7 sont fermées et que la pince 8 est ouverte. Pour compacter un peu plus de longueur de fil, la pince 7 s'ouvrira et le piston 3 remontera grâce au coulisseau 10 jusqu'à sa position relevée.

Un avantage important de l'invention est de pouvoir compacter le fil par étapes successives. En effet, si on veut compacter en une seule fois comme l'enseigne le brevet FR 1 496 345, la densité de pression n'est pas homogène dans le bloc constituant l'anode. Il en résulte que l'imprégnation de l'anode par un électrolyte se fera différemment selon que les parties d'anode sont plus ou moins compressées. Il y a même une limite de pression au-delà de laquelle l'imprégnation ne peut plus s'effectuer.

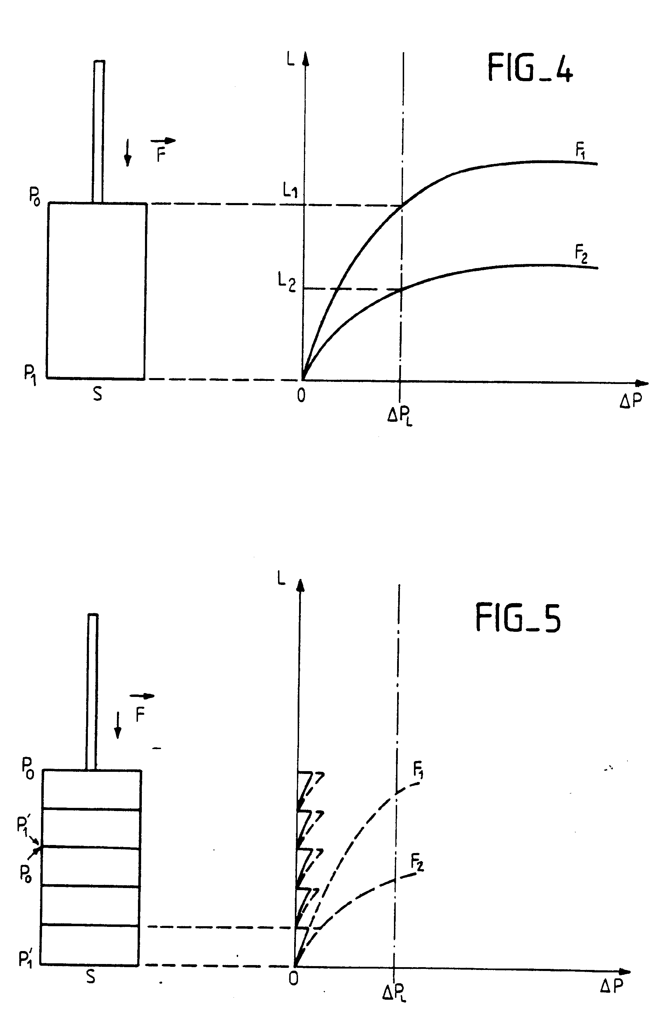

La figure 4 représente un diagramme donnant la densité de pression P, correspondant à la force F exercée par le piston sur le bloc d'anode en formation selon l'art connu, en fonction de la longueur d'anode L à obtenir. A gauche de ce diagramme et en relation avec lui, on a représenté un bloc d'anode obtenu selon l'art connu. Ce bloc d'anode possède une section S. Sous l'effet d'une force F exercée par le piston, la pression existant sur la face supérieure du bloc d'anode est Pₒ et celle existant à la base du bloc d'anode est P₁. A cause des forces de frottement sur les parois de la cavité, la pression P₁ est inférieure à Pₒ de la valeur ΔP. Sur le diagramme, on a représenté la valeur limite ΔP_{L} de densité de pression à ne pas dépasser pour que l'imprégnation se fasse correctement. Pour une force F₁ exercée sur le piston, la longueur maximum d'anode réalisable sera donc L₁. Pour une force F₂ supérieure à F₁, et provoquant par conséquent des frottements plus importants, la longueur maximum d'anode réalisable sera L₂ inférieure à L₁. Il apparaît donc que le procédé selon l'art connu ainsi que son dispositif de mise en oeuvre ne laissent pas une grande liberté de manoeuvre.

La figure 5 représente le même type de diagramme que celui de la figure 4 mais pour former un bloc d'anode selon l'invention. Le bloc d'anode exemplifié a été formé en cinq fois. Il est donc constitué de cinq parties superposées mais formant un ensemble. Pour chacune de ces parties, la pression existant à leur base lors du compactage est P'₁ et la pression existant à leur face supérieure est Pₒ. La hauteur de chaque partie du bloc d'anode étant faible, la pression P'₁ n'est que légèrement inférieure à Pₒ. Théoriquement, il n'y a pas de limite à la longueur d'anode réalisable puisque la densité de pression n'atteint jamais la densité limite comme le montre le diagramme de la figure 5. En effet, chaque fois qu'une nouvelle partie d'anode commence à se former, la densité de pression s'annule.

Les anodes obtenues par le procédé selon l'invention sont délivrées en continu sous la forme d'un chapelet. Elles subiront des traitements bien connus de l'homme de l'art pour réaliser des condensateurs électrolytiques. Elles pourront soit être détachées les unes des autres et traitées individuellement, soit subir certains traitements avant d'être séparées.

L'invention peut s'appliquer à tout type de métal anodisable et en particulier à l'aluminium et au tantale.

L'invention permet d'utiliser le fil métallique en continu, ce qui est très important pour une industrialisation rationnelle.

Le matage et le bourrage du fil dans la cavité pouvant se faire par étapes successives, on ne rencontre pas de limite mécanique pour la réalisation des différents éléments du dispositif (piston, manchon). Tous les formats d'anodes sont possibles (en forme et en dimensions). Le fil métallique utilisé peut être très fin, ce qui a pour avantage d'augmenter la surface active de l'anode.

L'invention permet aussi d'adapter au mieux la densité de pressage par rapport à l'électrolyte qui sera utilisé, ceci afin d'optimiser l'imprégnation.

## Revendications

1. Procédé de fabrication d'anodes fil pour condensateurs électrolytiques, les anodes étant obtenues par compactage d'un fil (5) en métal anodisable dans la cavité (2) d'un manchon de compression (1) sous l'effet d'un piston (3), caractérisé en ce que, le fil traversant de part en part le piston selon l'axe de son déplacement et le manchon par passage dans sa cavité, le procédé comporte, pour la réalisation d'une anode, les opérations suivantes :
a) obturation du fond de la cavité et fixation du fil à ce niveau,
b) immobilisation du fil par rapport au piston qui est dans sa position relevée,
c) compactage du fil dans la cavité par enfoncement du piston,
d) le fil et le piston sont désolidarisés,
e) si nécessaire répétition des opérations b) à d) jusqu'à obtenir la longueur d'anode désirée avec remontée préalable du piston jusqu'à sa position relevée,
f) ouverture du fond de la cavité et évacuation de l'anode obtenue hors de la cavité grâce au piston,
g) remontée du piston jusqu'à sa position relevée, l'anode précédemment obtenue demeurant dans sa position évacuée, pour débuter la fabrication de l'anode suivante.

2. Dispositif pour la mise en oeuvre du procédé selon la revendication 1, le dispositif comprenant un piston (3), un manchon de compression (1) percé de part et d'autre d'une cavité (2) dans laquelle peut coulisser le piston (3), des moyens d'obturation (6) du fond de la cavité sur lesquels le fil est compacté caractérisé en ce que le piston (3) est percé d'un trou axial permettant le passage du fil (5) à compacter, le dispositif comprenant également des moyens d'immobilisation (7) du fil (5) par rapport au piston (3).

3. Dispositif selon la revendication 2, caractérisé en ce qu'il comprend également des moyens de retenue (8) de l'anode (12) formée lorsque celle-ci est évacuée hors de la cavité.

4. Dispositif selon l'une des revendications 2 ou 3, caractérisé en ce que les moyens d'obturation (6) et/ou les moyens d'immobilisation (7) et/ou les moyens de retenue (8) sont des pinces.

## Patentansprüche

1. Verfahren zur Herstellung von Drahtanoden für Elektrolytkondensatoren, wobei die Anoden erhalten werden durch Verdichten eines Drahtes (5) aus einem anodisierbaren Metall in dem Hohlraum (2) einer Kompressionsbuchse (1) unter der Wirkung eines Kolbens (3), dadurch gekennzeichnet, daß der Draht den Kolben entlang der Achse seiner Verstellung und die Buchse durch Überführen in ihren Hohlraum vollständig durchquert, wobei das Verfahren zur Herstellung einer Anode die folgenden Schritte umfaßt:
a) Verschließen des Bodens des Hohlraums und Befestigen des Drahtes auf diesem Niveau,
b) Festlegen des Drahtes bezüglich des Kolbens, der sich in seiner hochgezogenen Position befindet,
c) Verdichten des Drahtes in dem Hohlraum durch Eindrücken des Kolbens,
d) Lösen des Drahtes vom Kolben,
e) falls nötig, Wiederholen der Schritte b) bis d), bis die gewünschte Anodenlänge erhalten wird, wobei vorher der Kolben bis zu seiner hochgezogenen Position angehoben wird,
f) Öffnen des Bodens des Hohlraums und Herausführen der erhaltenen Anode aus dem Hohlraum mittels des Kolbens,
g) Anheben des Kolbens bis zu seiner hochgezogenen Position, wobei die vorher erhaltene Anode in ihrer herausgeführten Position verbleibt, um die Herstellung der nachfolgenden Anode zu beginnen.

2. Vorrichtung zur Ausführung des Verfahrens nach Anspruch 1, wobei die Vorrichtung einen Kolben (3) und eine Kompressionsbuchse (1) enthält, die vollständig von einem Hohlraum (2) durchbrochen ist, in dem der Kolben (3) gleiten kann, sowie Verschlußmittel (6) für den Boden des Hohlraums, in dem der Draht verdichtet wird, dadurch gekennzeichnet, daß der Kolben (3) von einem axialen Loch durchbrochen ist, das den Durchgang des zu verdichtenden Drahtes (5) erlaubt, wobei die Vorrichtung auch Festlegungsmittel (7) für den Draht (5) bezüglich des Kolbens (3) enthält.

3. Vorrichtung nach Anspruch 2, dadurch gekennzeichnet, daß sie auch Rückhaltemittel (8) für die gebildete Anode (12) enthält, wenn diese aus dem Hohlraum herausgeführt ist.

4. Vorrichtung nach einem der Ansprüche 2 oder 3, dadurch gekennzeichnet, daß die Verschlußmittel (6) und/oder die Festlegungsmittel (7) und/oder die Rückhaltemittel (8) Klemmen sind.

## Claims

1. Process for manufacturing wire anodes for electrolytic capacitors, the anodes being obtained by the compacting of a wire (5) made of anodizable metal in the cavity (2) of a compression sleeve (1) under the effect of a piston (3), characterized in that, the wire passing right through the piston along the axis of its displacement and the sleeve by means of a passage in its cavity, the process includes, for the production of an anode, the following operations:
a) closing off the bottom of the cavity and fixing the wire in this region,
b) immobilizing the wire in relation to the piston which is in its raised position,
c) compacting the wire in the cavity by pushing the piston right in,
d) the wire and piston are disconnected,
e) if necessary, operations b) to d) are repeated until the desired anode length is obtained with prior lifting of the piston as far as its raised position,
f) opening the bottom of the cavity and discharging the anode obtained out of the cavity by virtue of the piston,
g) lifting the piston as far as its raised position, the previously obtained anode remaining in its discharged position in order to start the manufacture of the next anode.

2. Device for the implementation of the process according to Claim 1, the device comprising a piston (3), a compression sleeve (1) pierced right through by a cavity (2) in which the piston (3) can slide, means (6) for closing off the bottom of the cavity against which means the wire is compacted, characterized in that the piston (3) is pierced by an axial hole allowing passage of the wire (5) to be compacted, the device also comprising means (7) for immobilizing the wire (5) in relation to the piston (3).

3. Device according to Claim 2, characterized in that it also comprises means (8) for retaining the formed anode (12) when the latter is discharged from the cavity.

4. Device according to either of Claims 2 or 3, characterized in that the closing-off means (6) and/or the immobilizing means (7) and/or the retaining means (8) are clamps.
